# DEMANDE DE BREVET EUROPEEN

(11) **EP 4 036 642 A1**
(43) Date de publication de la demande: **03.08.2022**
(21) Numéro de dépôt: 21154304.6
(22) Date de dépôt: 29.01.2021
(51) Int. Cl.: G03B 15/06

(54) **CAISSON LUMINEUX POUR LA PHOTOGRAPHIE ET LA VIDEOGRAPHIE**

(71) Demandeur: Henry, Raphael, 1227 Carouge (CH)
(72) Inventeur: Henry, Raphael, 1227 Carouge (CH)
(74) Mandataire: e-Patent SA

(57) **Abrégé**

1. Caisson lumineux (1) pour la photographie et/ou la vidéographie d'un objet, comprenant :
- un boitier (3) comprenant une pluralité de parois définissant un volume intérieur ainsi qu'un accès (5) prévu sur une face dudit boitier destiné à se diriger vers un utilisateur, ledit accès (5) étant conformé pour lui permettre d'y insérer au moins une main ;
- un système d'illumination et de visualisation (1) logé dans le boitier (3) et définissant un volume de travail (7) en communication avec ledit accès (5) ; caractérisé en ce que ledit système d'illumination et de visualisation (19) comprend :
- au moins un élément diffuseur de lumière (21) qui se situe à une distance prédéterminée d'au moins l'une desdites parois afin de définir un interstice (23) entre ledit élément diffuseur de lumière (21) et ladite l'une desdites parois, ledit élément diffuseur de lumière (21) délimitant au moins partiellement ledit volume de travail (5) ;
- au moins une source de lumière (25) se situant dans ledit interstice (23) et agencée pour illuminer ledit volume de travail (5) de manière diffuse au travers dudit élément diffuseur de lumière (21) ;
- au moins une source de lumière ponctuelle (25, 35) éteignable, masquable ou amovible, agencée pour illuminer directement ledit volume de travail (5) ;
- au moins une caméra digitale (31) agencée pour pouvoir photographier au moins une partie dudit volume de travail (5).

## Description

### Domaine technique

La présente invention se rapporte à un caisson lumineux pour la photographie et la vidéographie. Elle concerne, plus particulièrement, un tel caisson qui est particulièrement adapté pour la photographie et la vidéographie d'objets de luxe tels que des pièces d'horlogerie, de bijouterie, et de joaillerie etc.

### Etat de la technique

Le document US7055976 décrit un caisson lumineux photographique pliable, qui peut être assemblé de telle sorte à fournir un volume de travail illuminé de manière diffuse. En position de service, le caisson, qui est de section carrée ou rectangulaire, comporte trois parois latérales, un élément de fond ainsi qu'un système d'illumination servant de plafond et logeant un tube fluorescent qui illumine l'intérieur du caisson au travers d'un élément diffuseur afin de fournir une lumière diffuse. Le caisson est ouvert vers l'avant de telle sorte qu'un utilisateur puisse placer un objet en son intérieur et le photographier au travers de la paroi manquante.

Après utilisation, l'unité d'illumination peut être enlevée des parois et stockée dans l'élément de fond, qui présente, à cet effet, une forme creuse. Les trois parois sont subséquemment repliées vers l'intérieur de telle sorte que la paroi arrière sert de couvercle pour l'ensemble.

Ce type de caisson lumineux est assez classique, et est communément utilisé pour la photographie et la vidéographie générale (ci-après simplement « photographie »). Cependant, il présente des limitations au niveau de la photographie de certains objets, tels que des pièces d'horlogerie (montres), de bijouterie et de joaillerie. La lumière diffuse produite est très « plate » et ne laisse pas scintiller des pierres taillées. Pour le surplus, des détails du décor (guillochage, textures, etc.) sont parfois difficile à photographier clairement, particulièrement lorsque leur contraste est limité.

Pour le surplus, de tels caissons lumineux classiques sont difficilement adaptables à une utilisation en temps réel pour montrer des objets à des personnes à distance via un réseau tel que internet, par exemple pour la vente à distance, notamment au vu du fait que la caméra doit être placée à l'extérieur du caisson et entrave le travail de l'utilisateur s'il veut manipuler l'objet.

Le but de l'invention est par conséquent de proposer un caisson lumineux dans lequel les défauts susmentionnés sont au moins partiellement surmontés.

### Divulguation de l'invention

De façon plus précise, l'invention concerne un caisson lumineux pour la photographie et/ou la vidéographie d'un objet, comprenant :
- un boitier d'une forme quelconque, comprenant une pluralité de parois définissant un volume intérieur ainsi qu'un accès prévu sur une face dudit boitier destinée à se diriger vers un utilisateur en position de service (c'est-à-dire la face frontale) et conformé pour lui permettre d'y insérer au moins une main pour manipuler ledit objet ;
- un système d'illumination et de visualisation logé dans le boitier et définissant un volume de travail en communication avec ledit accès pour que l'utilisateur puisse y accéder avec une ou plusieurs mains.

Selon l'invention, ledit système d'illumination et de visualisation comprend :
- au moins un élément diffuseur de lumière (tel qu'une plaque en matière plastique translucide) qui se situe à une distance prédéterminée d'au moins l'une desdites parois afin de définir un interstice entre ledit élément diffuseur et ladite l'une desdites parois, ledit élément diffuseur étant également agencé pour au moins partiellement délimiter ledit volume de travail;
- au moins une source de lumière se situant dans ledit interstice et agencée pour illuminer ledit volume de travail de manière diffuse au travers dudit élément diffuseur ;
- au moins une source de lumière ponctuelle éteignable, masquable ou amovible, agencée pour illuminer directement ledit volume de travail sans que la lumière émise soit diffusée par ledit élément diffuseur, cette source de lumière ponctuelle pouvant être une ou plusieurs lampes spot et/ou plusieurs LEDs, fibres optiques ou similaire ;
- au moins une caméra digitale intégrée audit système d'illumination et de visualisation, qui est agencée pour pouvoir photographier au moins une partie dudit volume de travail, les images digitales prises par la caméra pouvant bien entendu être communiquées à un ordinateur, tablette, smartphone ou similaire, intégré à, posé sur, à proximité ou à distance du caisson.

Par ces moyens, des objets visualisés par la caméra intégrée peuvent être illuminés de manière optimale, en fonction de leurs propriétés optiques (état de surface, présence ou absence de pierres taillées, de zones réfléchissantes, de zones de surface texturisées et de contraste bas etc.) Pour le surplus, puisque la caméra est intégrée dans le caisson, la manutention et la présentation de l'objet sont significativement facilitées par rapport à une caméra externe.

Avantageusement, ledit accès peut être refermable, ce qui protège le volume de travail de poussières, saletés etc. lors de son transport et de son stockage.

Avantageusement, ledit caisson peut comporter un support agencé pour soutenir un écran, un ordinateur tablette ou un smartphone sur l'extérieur dudit boitier en regard dudit utilisateur.

Avantageusement, ledit au moins une source de lumière ponctuelle peut comporter au moins l'un de :
- au moins une source de lumière ponctuelle, tel qu'une LED, intégrée dans ledit élément diffuseur ;
- une guide de lumière, tel qu'une fibre optique ou un agencement à périscope, passant au travers dudit élément diffuseur et agencée pour guider de la lumière ponctuelle depuis une source de lumière située dans ledit interstice ;
- au moins une source de lumière ponctuelle située en regard d'une partie amovible dudit élément diffuseur de telle sorte que, si la partie amovible est enlevée, cette source de lumière ponctuelle illumine le volume de travail directement et de manière non diffuse ;
- au moins une source de lumière ponctuelle tel qu'une LED située sur une plaque amovible montée sur ledit élément diffuseur dans le volume de travail ;
- au moins une lampe spot située à l'intérieur dudit volume de travail.

Ces options, prises individuellement ou en combinaison, donnent de la flexibilité pour optimiser la visualisation d'objets tel que des pièces d'horlogerie, de bijouterie, de joaillerie ou autres.

Avantageusement, le caisson peut comporter au moins un réflecteur situé dans ledit interstice, ladite au moins une source de lumière étant montée audit réflecteur en regard dudit élément diffuseur. L'intensité de la lumière diffuse peut ainsi être améliorée.

Avantageusement, ladite caméra digitale peut être montée sur ledit élément diffuseur au moins partiellement (de préférence entièrement) dans ledit interstice, le diffuseur présentant une ouverture alignée avec l'axe optique de ladite caméra. La visibilité de la caméra lorsqu'un objet réfléchissant (tel que la glace d'une montre) est visualisée est ainsi minimisée.

Avantageusement, ledit caisson lumineux peut comprendre des organes de commande situés sur ledit boitier et agencés pour commander ladite camera et/ou l'ensemble desdites sources lumineuses.

Avantageusement, ledit caisson peut comprendre en outre au moins un réflecteur supplémentaire qui coopère avec ledit élément diffuseur afin de délimiter ledit volume de travail.

Avantageusement, ledit caisson lumineux peut être agencé pour être démonté ou plié.

### Brève description des dessins

D'autres détails de l'invention apparaîtront plus clairement à la lecture de la description qui suit, faite en référence aux dessins annexés dans lesquels :
- Figure 1 est une vue isométrique extérieure d'un caisson lumineux selon l'invention, en position de transport ;
- Figure 2 est une vue isométrique extérieure du caisson lumineux de la figure 1, en position de service ;
- Figure 3 est une vue isométrique explosée d'une première variante spécifique d'un caisson lumineux selon l'invention, et dont certains éléments du boitier n'ont pas été représentés ;
- Figure 4 est une vue en coupe latérale du caisson lumineux de la figure 3, la coupe passant par la caméra et la direction de vue étant parallèle au plan de la face frontale du boitier ;
- Figure 5 est une vue en coupe longitudinale du caisson lumineux de la figure 3, la coupe passant par la caméra et la direction de vue étant perpendiclaire au plan de la face frontale du boitier ;
- Figure 6 est une vue isométrique explosée d'une deuxième variante spécifique d'un caisson lumineux selon l'invention, et dont certains éléments du boitier n'ont pas été représentés ;
- Figure 7 est une vue en coupe latérale du caisson lumineux de la figure 6, la coupe passant par la caméra et la direction de vue étant parallèle au plan de la face frontale du boitier ;
- Figure 8 est une vue en coupe longitudinale du caisson lumineux de la figure 6, la coupe passant par la caméra et la direction de vue étant perpendiculaire au plan de la face frontale du boitier ;
- Figure 9 est une vue semblable à celle de la figure 7, la partie amovible du diffuseur ayant été enlevée ; et
- Figure 10 est une vue semblable à celle de la figure 8, la partie amovible du diffuseur ayant été enlevée.

### Modes de réalisation de l'invention

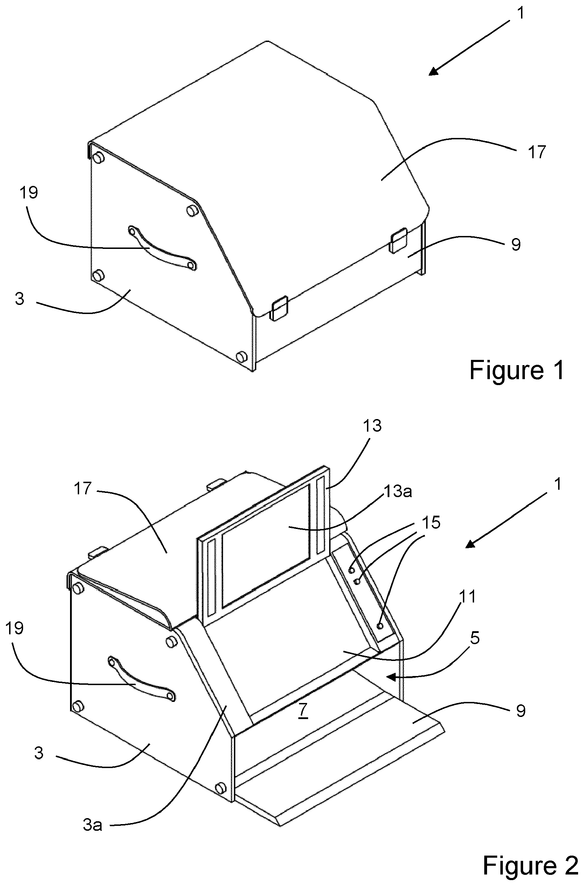

Les figures 1 et 2 illustrent un caisson lumineux 1 selon l'invention, vu depuis l'extérieur. Ce caisson 1 comporte un boitier 3 définissant un volume à son intérieur, et muni d'un accès 5 frontal sur toute la largeur d'une face du boitier 3 qui est destiné à se situer en regard d'un utilisateur lorsque le caisson 1 est en utilisation. Cependant, un accès 5 qui ne s'étend pas sur toute la largeur de la face frontale du boitier 3 est également possible, dans la mesure où l'utilisateur peut y accéder aisément avec au moins une main, de préférence avec ses deux mains. Le boitier 3 peut être construit en matériau rigide, par exemple en bois, métal ou plastique rigide, afin de protéger les éléments situés à son intérieur lors du transport.

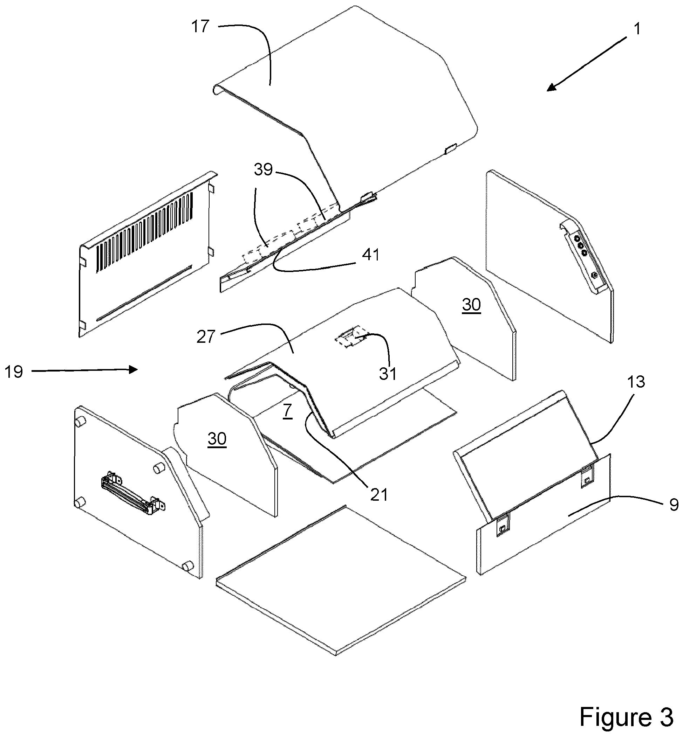

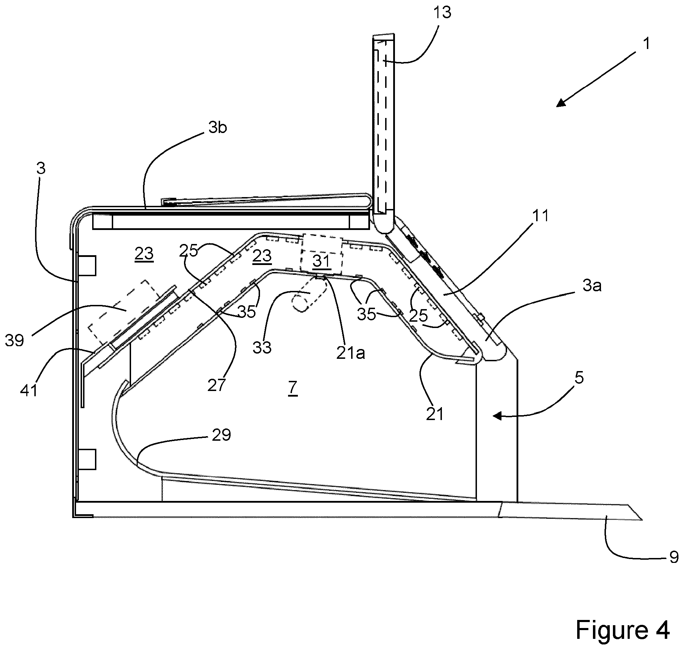

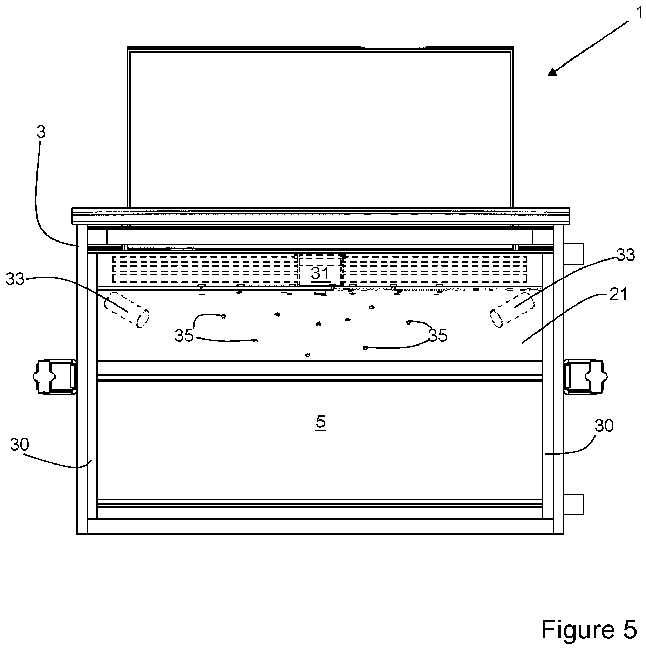

L'accès 5 est conformé de telle sorte à permettre à l'utilisateur d'accéder à un volume de travail 7 qui se situe à l'intérieur du boitier et qui sera décrit plus en détails en référence aux figures 3 à 5 ci-dessous.

Pour le surplus, l'accès 5 est refermable par le biais d'un volet 9, monté en pivotement sur le boitier 3 de telle sorte à s'ouvrir vers le bas (par rapport à l'orientation du caisson 1 en position de service) pour permettre un accès sans obstacle pour les deux mains de l'utilisateur. Alternativement, au lieu d'un volet 9, une plaque amovible peut être prévue pour fermer l'accès 5.

Dans le mode de réalisation illustré, le boitier 3 comporte également un logement 11 pour le posage d'un ordinateur tablette sur une face frontale oblique 3a du boitier 3, qui est refermable par un deuxième volet 13 monté en pivotement sur le boitier 3 de telle sorte à pouvoir s'ouvrir vers le haut. Alternativement, au moins un écran peut être intégré dans la face frontale oblique 3a et/ou dans la face 13a du deuxième volet 13 destiné à se situer en regard de l'utilisateur lorsque le caisson 1 est en position de service. Alternativement, un écran externe peut être utilisé.

Afin de commander l'ensemble des éléments électriques et/ou électroniques intégrés au caisson 1, des organes de commande 15 sont également prévus sur la face oblique 3a du boitier 3, à côté du logement 11

Finalement, un couvercle souple 17 est prévu, ce dernier étant agencé pour couvrir la face supérieure ainsi que la face oblique 3a en position de transport, et des poignées 19 ad hocs peuvent être prévues sur les côtés latéraux du boitier pour faciliter son transport.

Il est néanmoins à noter que, dans un mode de réalisation plus simple, l'un ou plusieurs du volet 9, logement 11, deuxième volet 13, organes de commande 15, couvercle 17 et poignées 19 peut/peuvent être omis, et la forme du boitier 3 peut être choisie de manière ad hoc.

À l'intérieur du boitier 3 se trouve un système d'illumination et de visualisation 19, dont un premier mode de réalisation est illustré sur les figures 3 à 5.

Le système 19 comporte un élément diffuseur 21 (ci-après simplement « diffuseur ») qui sert à délimiter le côté supérieur du volume de travail 7, et qui est, dans le mode de réalisation illustré, de forme globalement concave définie par une plaque pliée selon deux lignes afin de définir trois surfaces faisant un angle obtus entre eux. Cependant, la forme du diffuseur 21 illustrée n'est pas obligatoire, ce dernier pouvant être planaire ou de n'importe quelle forme appropriée et choisie de façon ad hoc. Par exemple, une forme en « tente » formé de deux, trois, quatre, cinq ou même plus de sections planaires est envisageable.

Le diffuseur 21 est typiquement en matière plastique translucide, comme généralement connu dans l'art, et est positionné dans le volume intérieur du boitier 3 de telle sort à définir un interstice 23 entre la paroi supérieure 3b du boitier et le diffuseur 21. Dans cet interstice se trouve au moins une source lumineuse 25, ici illustrée comme une pluralité de LEDs montés sur un réflecteur 27 en regard du diffuseur 21, le réflecteur 27 s'étendant substantiellement parallèle à ce dernier. Typiquement, le réflecteur 27 est de type à réflexion diffuse, mais ceci n'est pas obligatoire. En effet, la présence du réflecteur 27 n'est pas obligatoire non plus, l'au moins une source lumineuse 25 étant soutenue dans l'interstice 23 sur un support quelconque ou fixée directement sur l'une des parois du boitier 3, qui peuvent être de couleur blanche si un effet de réflexion diffuse est quand-même souhaité.

La partie inférieure du volume de travail 7 est définie par un réflecteur supplémentaire 29 à réflexion diffuse, qui est incliné et présente un bord courbé afin de rejoindre le diffuseur 21 à l'arrière du volume intérieur du boitier 3. À nouveau, ce réflecteur supplémentaire 29, qui est typiquement de couleur blanche, est facultatif et peut donc être omis, l'intérieur du fond du boitier 3 pouvant être muni d'une coloration appropriée (blanc, noir, ou n'importe quelle autre teinte souhaitée). Les bords latéraux du volume de travail 7 sont définis par des réflecteurs latéraux 30, également de type diffuse, qui, à nouveau, peuvent éventuellement être omis dans un souci de simplification.

Par ces moyens, l'intérieur du volume de travail 7 peut être baigné de lumière diffuse.

Afin de visualiser un objet tel qu'une pièce d'horlogerie, de bijouterie, de joaillerie ou similaire, placé ou tenu par l'utilisateur dans le volume de travail 7, une caméra digitale 31 (à images fixes et/ou à vidéo) est montée à l'intérieur du boitier 3 de telle sorte à pouvoir visualiser au moins une partie du volume de travail 7. Dans le mode de réalisation illustré, cette caméra 31 est montée sur le diffuseur 21 dans l'interstice 23 (c'est-à-dire sur le côté du diffuseur 21 qui est en regard de l'interstice 23), son axe optique étant aligné avec une ouverture 21a prévue à un endroit ad hoc (typiquement à ou près de la partie supérieure du diffuseur 21) afin de prendre des images au travers de ladite ouverture 21a d'un objet présenté à la caméra dans le volume de travail 7. Ce faisant, la caméra 31 peut être connectée avec un ordinateur tablette posé sur le boitier 3, avec un ordinateur intégré dans le caisson 1 ou avec un autre ordinateur, Smartphone ou similaire, afin d'enregistrer des photos et vidéos, et afin de pouvoir montrer la pièce à un tiers par vidéoconférence, ou similaire.

Les moyens décrits jusqu'à ici permettent de visualiser des objets en générale, mais le caisson 1, selon l'invention, présente des aspects supplémentaires permettant d'améliorer la visualisation de certains objets, tels que (mais pas limités à) des pièces d'horlogerie, de bijouterie ou de joaillerie.

En premier lieu, afin de générer des scintillations de pierres taillées comportées par l'objet, une pluralité de sources de lumière ponctuelles 35 sont prévues pour fournir une illumination ponctuelle directe. Dans le mode de réalisation illustré, ces sources de lumière ponctuelles 35 sont des LEDs montés dans le diffuseur 21, de préférence à fleur avec sa surface qui est en regard du volume de travail 7, de telle sorte à émettre leur lumière dans le volume de travail 7 sans effet de diffusion. Alternativement, les sources de lumière ponctuelles peuvent être définies par les extrémités d'une pluralité de guides d'ondes, telles que des fibres optiques, des périscopes passant au travers du diffuseur 21 ou similaires, et agencés pour guider de la lumière émise par une source lumineuse située dans l'interstice 23 ou ailleurs dans le caisson 1. Les points de lumière ainsi crées par les sources de lumière ponctuelles 35 aident notamment à faire scintiller des pierres taillées, et peuvent également améliorer l'impression visuelle de surfaces réfléchissantes facettées et similaires.

En deuxième lieu, pour assister à rendre plus visible des textures de surface tel que du guillochage, des motifs en relief ou en textures ou similaire, où le contraste de couleur est très limité, au moins une source de lumière ponctuelle d'un différent type est également prévue, notamment au moins une lampe spot 33 située à l'intérieur du volume de travail. Cette lampe spot 33 est de préférence à direction ajustable et est agencée pour illuminer l'objet à visualiser avec de la lumière directe (c'est-à-dire non diffusée) et oblique. Dans le mode de réalisation illustré, deux lampes spot 33 sont prévues, situées symétriquement de part et d'autre de l'ouverture 21a et fixées soit au diffuseur 21, soit aux parois latérales du boitier 3. Ces lampes spot 33 peuvent être de n'importe quel type (LED, incandescent, fluorescent etc.), et un nombre quelconque peut être prévu. Cependant, leur présence n'est pas obligatoire.

Puisqu'il est parfois utile de pouvoir varier l'illumination en fonction des propriétés de l'objet visualisé, l'un, l'autre ou les deux des lampes spot 33 et les sources de lumière ponctuelles 35 sont susceptibles d'être éteintes, notamment par le biais des organes de commande 15. Par exemple, dans le cas d'une visualisation d'une pièce d'horlogerie dépourvue de pierres taillées, les sources de lumière ponctuelles 35 peuvent être éteintes afin d'éviter des reflets sur la glace. Par ailleurs, si les lampes spot 33 donnent lieu à des reflets gênants, elles peuvent également être éteintes.

L'alimentation en courant de la caméra 31 ainsi que des sources de lumière 25, 33, 35 est assurée par une source électrique 39, qui peut comporter une ou plusieurs batteries, un ou plusieurs transformateurs pour transformer du courant du réseau ou similaire, monté(e)(s) entre le réflecteur 27 et le boitier 3, par exemple sur une plaque de montage 41 fixée à une paroi de ce dernier.

Un désavantage de la construction des figures 3 à 5 réside dans le fait que les sources de lumière ponctuelles 35 traversent le diffuseur 21, et par conséquent, sont visibles en tant que points foncés lorsqu'elles sont éteintes. Lors de la visualisation d'une montre, par exemple, leurs reflets sont ainsi visibles sur la glace de la montre, et la perception d'une matière ou d'un couleur peut être négativement influencée.

La construction illustrée sur les figues 6 à 10 surmonte ce problème. La plupart des éléments sont inchangés par rapport au mode de réalisation des figures 3 à 5, et ne seront donc pas redécrits. Pour le surplus, seuls les signes de référence mentionnés ci-dessous sont reproduits sur ces figures.

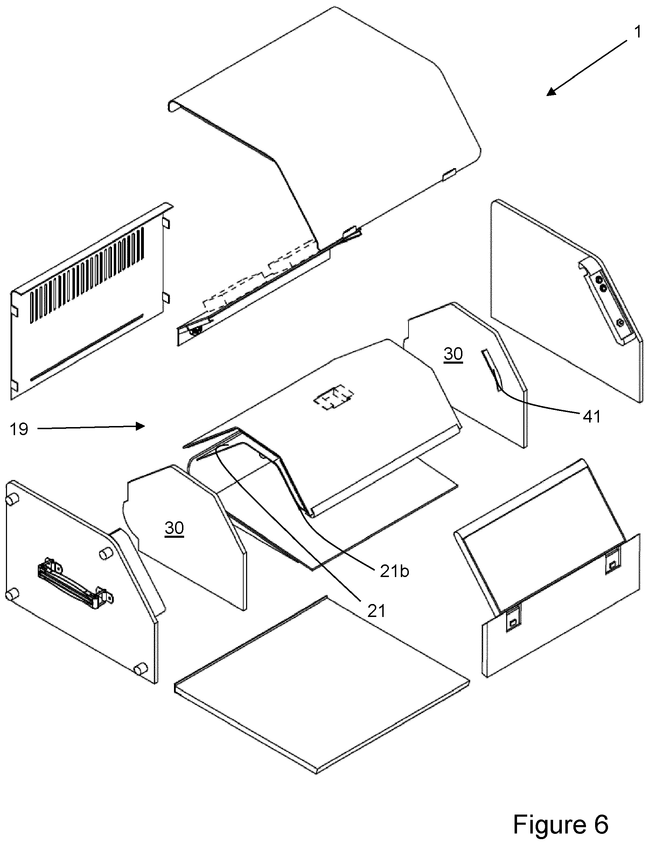

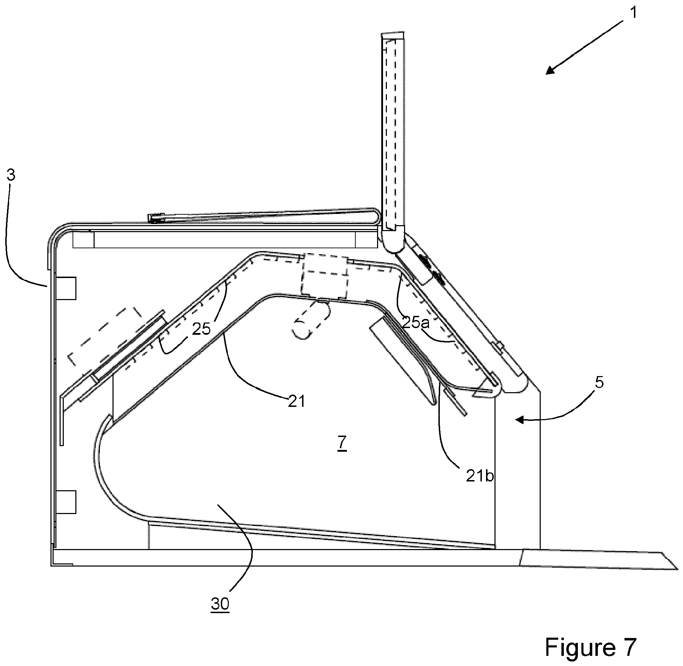

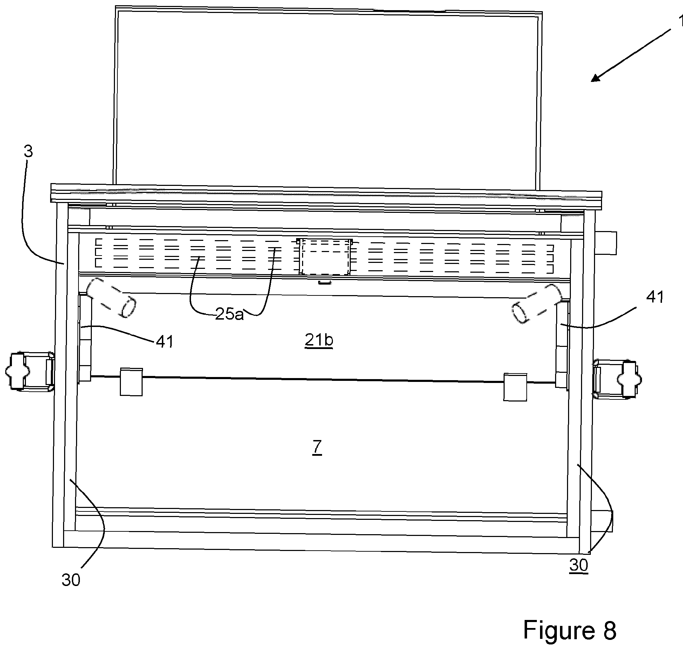

Dans ce mode de réalisation, le diffuseur 21 est dépourvu de sources de lumière ponctuelles 35 et, à leur place, ce dernier comporte une section amovible 21b, visible sur les figures 6 à 8. Cette partie amovible 21b est soutenue par des supports de montage 41 ad hocs (ici illustrés comme des brides fixées aux réflecteurs latéraux 30 ou, en leur absence, aux parois latérales du boitier 3) de façon à permettre à l'utilisateur de l'enlever afin d'exposer un certain nombre 25a des sources lumineuses 25 au volume de travail 7. Ces sources lumineuses 25a peuvent ainsi non seulement contribuer à l'illumination diffuse lorsque la partie amovible 21a du diffuseur 21 est montée, mais également à émettre de la lumière directement dans le volume de travail 7 lorsque ladite partie amovible 21a est enlevée, sans que leur lumière soit soumise à une diffusion, et ainsi permettre de fournir des points de lumière directe sans laisser des points foncés visibles lorsqu'une illumination exclusivement diffuse est souhaitée.

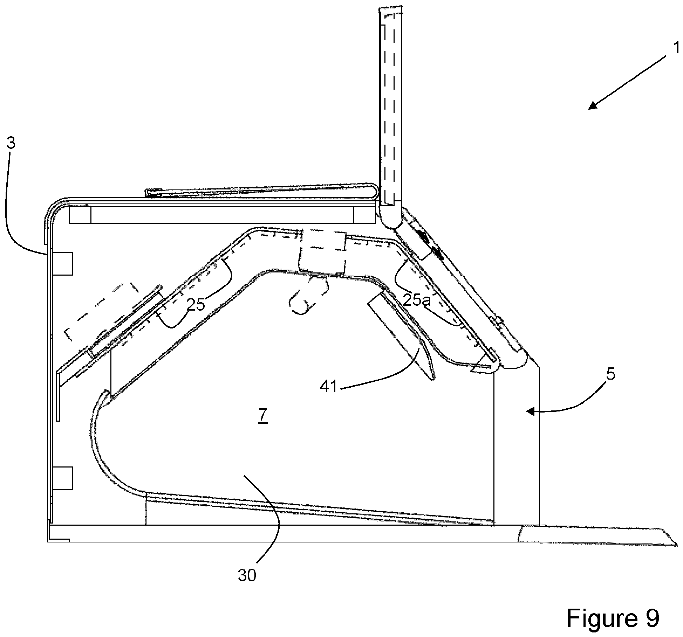

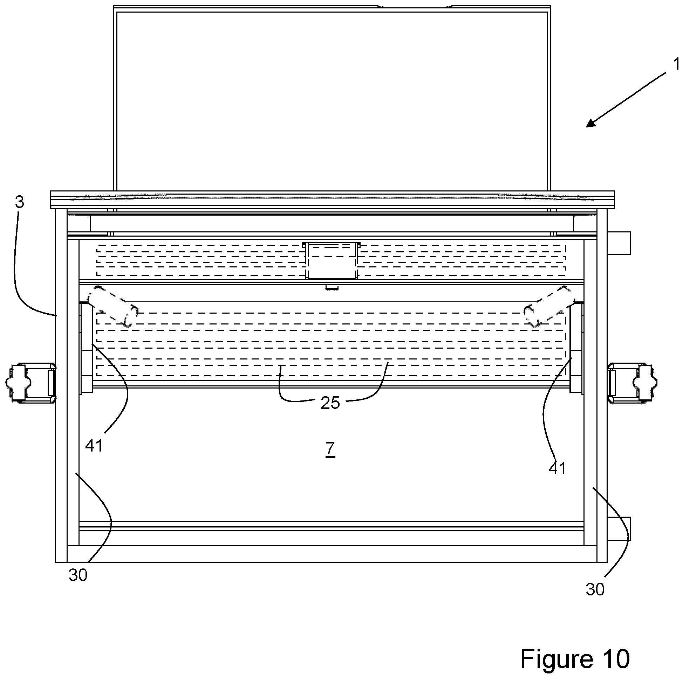

Avantageusement, la partie amovible 21 se situe sur la zone du diffuseur 21 qui est la plus proche de l'accès 5, et lorsqu'elle est enlevée (comme illustré sur les figures 9 et 10), les sources lumineuses 25 qui se trouvent en regard de l'ouverture ainsi dégagée sont rendues directement visibles depuis le volume de travail 7.

Dans une autre variante d'un caisson lumineux 1 selon l'invention, qui n'est pas représentée, les sources de lumière ponctuelles 35 peuvent être montées sur une plaque amovible qui peut être montée de façon similaire à la partie amovible 21 du diffuseur 21, ce dernier étant contiguë et sans ouverture.

Au vu de ce qui précède, il est clair que chaque mode de réalisation d'un caisson lumineux 1 selon l'invention représente une solution entièrement intégrée dans un seul boitier, qui est aisément transportable et simple à utiliser.

Bien que l'invention ait été précédemment décrite en lien avec des modes de réalisations spécifiques, d'autres variantes supplémentaires sont également envisageables sans sortir de la portée de l'invention comme définie par les revendications. Il est à noter, en particulier, qu'il est également possible de construire un caisson lumineux 1 selon l'invention de telle sorte à être démontable ou pliant.

## Revendications

1. Caisson lumineux (1) pour la photographie et/ou la vidéographie d'un objet, comprenant :
- un boitier (3) comprenant une pluralité de parois définissant un volume intérieur ainsi qu'un accès (5) prévu sur une face dudit boitier destinée à se diriger vers un utilisateur, ledit accès (5) étant conformé pour lui permettre d'y insérer au moins une main ;
- un système d'illumination et de visualisation (1) logé dans le boitier (3) et définissant un volume de travail (7) en communication avec ledit accès (5) ;
**caractérisé en ce que** ledit système d'illumination et de visualisation (19) comprend :
- au moins un élément diffuseur de lumière (21) qui se situe à une distance prédéterminée d'au moins l'une desdites parois afin de définir un interstice (23) entre ledit élément diffuseur de lumière (21) et ladite l'une desdites parois, ledit élément diffuseur de lumière (21) délimitant au moins partiellement ledit volume de travail (7) ;
- au moins une source de lumière (25) se situant dans ledit interstice (23) et agencée pour illuminer ledit volume de travail (7) de manière diffuse au travers dudit élément diffuseur de lumière (21) ;
- au moins une source de lumière ponctuelle (25, 35) éteignable, masquable ou amovible, agencée pour illuminer directement ledit volume de travail (7) ;
- au moins une caméra digitale (31) agencée pour pouvoir photographier au moins une partie dudit volume de travail (7).

2. Caisson lumineux (1) selon la revendication précédente, dans lequel ledit accès (5) est refermable.

3. Caisson lumineux (1) selon la revendication précédente, comprenant un support (11) agencé pour soutenir un écran, un smartphone ou un ordinateur tablette sur l'extérieur dudit boitier (3) en regard dudit utilisateur.

4. Caisson lumineux (1) selon l'une des revendications précédentes, dans lequel ladite au moins une source de lumière ponctuelle (25, 35) comporte au moins l'un de :
- au moins une source de lumière ponctuelle (35) intégrée dans ledit élément diffuseur de lumière (21) ;
- un guide de lumière passant au travers dudit élément diffuseur de lumière (21) et agencé pour guider de la lumière ponctuelle depuis une source de lumière située dans ledit interstice ;
- au moins une source de lumière ponctuelle (25) située en regard d'une partie amovible (21b) dudit élément diffuseur de lumière (21) ;
- au moins une source de lumière ponctuelle située sur une plaque amovible montée sur ledit élément diffuseur (21) ;
- au moins une lampe spot (33) située à l'intérieur du volume de travail (7).

5. Caisson lumineux (1) selon l'une des revendications précédentes, comprenant au moins un réflecteur (27) situé dans ledit interstice (23), ladite au moins une source de lumière (25) étant montée audit réflecteur (27) en regard dudit élément diffuseur de lumière (21).

6. Caisson lumineux (1) selon l'une des revendications précédentes, dans lequel ladite caméra digitale (31) est montée sur ledit élément diffuseur de lumière (21) dans ledit interstice (23), ledit élément diffuseur de lumière (21) présentant une ouverture (21a) alignée avec l'axe optique de ladite caméra (31).

7. Caisson lumineux (1) selon l'une des revendications précédentes, comprenant des organes de commande (15) situés sur ledit boitier (15) et agencés pour commander ladite camera (31) et/ou l'ensemble desdites sources lumières (25, 33, 35).

8. Caisson lumineux (1) selon l'une des revendications précédentes, comprenant en outre au moins un réflecteur supplémentaire (29) qui coopère avec ledit élément diffuseur de lumière (21) afin de délimiter ledit volume de travail (7).

9. Caisson lumineux (1) selon l'une des revendications précédentes, dans lequel ledit caisson (1) est agencé pout être démonté ou plié.
